**Europäisches Patentamt**

**European Patent Office**

**Office européen des brevets**

(11) Numéro de publication : **0 063 087**
**B1**

(12) **FASCICULE DE BREVET EUROPÉEN**

(45) Date de publication du fascicule du brevet :
**07.11.84**

(21) Numéro de dépôt : **82420034.9**

(22) Date de dépôt : **16.03.82**

(51) Int. Cl.³ : **H 01 R 39/38**

(54) **Perfectionnements aux ensembles de porte-balais pour moteurs électriques, notamment pour moteurs de traction.**

(30) Priorité : **20.03.81 FR 8105794**

(43) Date de publication de la demande :
**20.10.82 Bulletin 82/42**

(45) Mention de la délivrance du brevet :
**07.11.84 Bulletin 84/45**

(84) Etats contractants désignés :
**BE CH DE GB IT LI SE**

(56) Documents cités :
**DE-C-   419 671**
**FR-A- 1 126 944**
**FR-A- 2 182 768**

(73) Titulaire : **"LUCIEN FERRAZ & Cie" Société Anonyme**
**28, Rue Saint Philippe**
**F-69003 Lyon (FR)**

(72) Inventeur : **Cabaussel, Louis**
**26 Chemin de la Motte Saint Bonnet De Mure**
**F-69720 Saint Laurent de Mure (FR)**

(74) Mandataire : **Monnier, Joseph et al**
**Cabinet Monnier 142-150, Cours Lafayette**
**F-69003 Lyon (FR)**

## Description

On sait que dans certains moteurs électriques, et notamment ceux de traction, les porte-balais sont fixés à une couronne qui entoure le collecteur et qui peut tourner sur la carcasse concentriquement à celui-ci, des moyens étant prévus pour la bloquer à la position désirée, se référer par exemple au brevet français FR-A-2 182 768.

Cette disposition était initialement prévue pour permettre de régler le calage des balais par rapport à l'inducteur du moteur. Mais on l'a rapidement utilisée par la suite pour faciliter l'inspection et l'échange de ceux-ci. En effet les moteurs du genre en question sont en général fermés par des flasques très difficilement démontables et l'accès aux porte-balais est par conséquent malaisé. En prévoyant une porte de visite, on peut profiter de cette possibilité de rotation de la couronne de support pour faire passer successivement tous les porte-balais en face de celle-ci, ce qui facilite considérablement les opérations. Une fois celles-ci terminées, il suffit de bloquer à nouveau la couronne à la position correcte, convenablement repérée.

Mais bien entendu cette rotation de la couronne formant support des porte-balais pose le problème de liaison entre ces derniers et les circuits fixes du moteur. Pour le résoudre on a imaginé de réaliser cette liaison par le moyen de contacts frottants, savoir de couteaux et de pinces qui enserrent ceux-ci à la position de fonctionnement de la couronne, les couteaux étant généralement portés par la carcasse et les pinces par la couronne.

Toutefois, la réalisation des pinces a jusqu'ici exigé des opérations coûteuses et délicates. Leurs branches sont généralement faites par supersposition intime d'éléments en métal élastique mince (laiton, bronze) qui doivent être découpés et conformés individuellement, l'ensemble étant usiné avec des tolérances très faibles. En outre pour que de telles pinces présentent les qualités escomptées de conduction du courant, il faut que la position des couteaux par rapport à elles soit très exacte, toute erreur réduisant considérablement la surface effective de contact.

L'invention vise à permettre d'établir des pinces du genre en question de fabrication simplifiée et qui puissent tolérer des défauts appréciables dans la fixation des couteaux.

Selon un mode de réalisation décrit ci-après une pince du genre en question comprend une série d'anneaux élastiques fendus de diamètres différents, serrés les uns contre les autres en un point diamétralement opposé à leurs fentes, les différences de diamètre entre les anneaux successifs étant telles qu'à part vers le point de fixation il existe un espace libre notable entre les anneaux successifs.

. On comprend que dans ces conditions les anneaux agissent individuellement, de telle sorte que leurs tolérances de fabrication sont assez larges et qu'il est inutile de procéder après le montage à un usinage soigné des surfaces de contact. En outre du fait que ces anneaux peuvent se déformer indépendamment les uns des autres dans une large mesure, la pince s'adapte au couteau correspondant même si celui-ci n'est pas disposé de façon parfaite.

Le dessin annexé, donné à titre d'exemple, permettra de mieux comprendre l'invention, les caractéristiques qu'elle présente et les avantages qu'elle est susceptible de procurer :

Figure 1 montre une couronne formant support des porte-balais dans un moteur de traction ou autre.

Figure 2 est une coupe à grande échelle suivant II-II (fig. 1).

Figure 3 est une vue en plan de l'un des supports isolants à armature métallique utilisés.

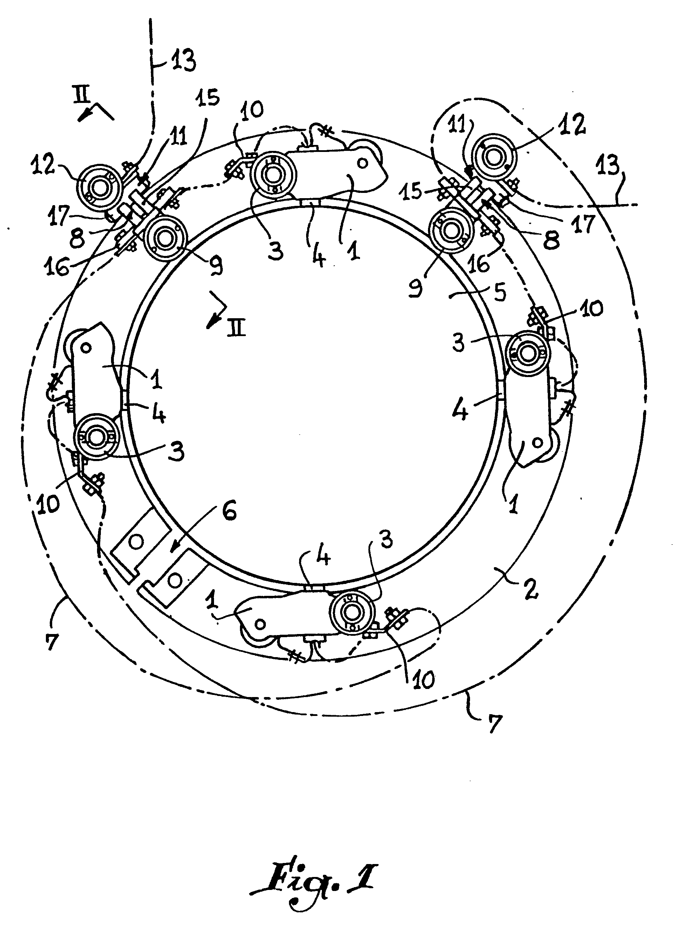

En Fig. 1 l'on distingue quatre porte-balais désignés par la référence générale 1 et qui sont fixés à une couronne 2 par l'intermédiaire de supports isolants 3. On a indiqué en 4 les balais renfermés par les porte-balais 1, et en 5 le collecteur sur lequel ils viennent porter. La couronne 2 est prévue de façon à pouvoir tourner concentriquement au collecteur 5 ans un guidage approprié établi sur la carcasse (non figurée) du moteur ou sur un flasque de celle-ci. Elle est faite en une pièce fendue et au niveau du joint de la fente, référencée 6, il est prévu des moyens, non figurés, pour permettre de serrer ou d'écarter celle-ci depuis la porte de visite en vue de bloquer l'ensemble de la couronne dans son guide.

Les porte-balais 1 opposés, de même polarité, sont reliés l'un à l'autre par un câble 7. Bien que les deux câbles 7 aient été représentés comme passant largement au-delà de la couronne 2, dans la réalité ils restent contre celle-ci à laquelle ils peuvent d'ailleurs être fixés en certains de leurs points pour éviter qu'ils ne flottent à l'intérieur du moteur.

. A l'un des deux porte-balais de chacune des paires ainsi réalisées par des conducteurs 7 est associé un dispositif de pince 8 fixé à la couronne 2 par l'intermédiaire d'un support 9 identique aux supports 3 des porte-balais eux-mêmes, ce dispositif étant relié aux porte-balais de même polarité par une lame conductrice 10. Chaque dispositif de pince 8 coopère avec un dispositif de couteau 11 rendu solidaire de la carcasse ou flasque par le moyen d'un support isolant 12 qui, là encore, est identique aux supports 3 précités de chaque dispositif de couteau par un câble 13.

La Fig. 2 montre le détail des dispositifs 8 et 11. Celui de pince 8 comprend une embase 14 dont la face opposée au support isolant 9 est creusée d'un siège 14a à profil en arc de cercle, deux jeux successifs de trois anneaux élastiques fendus 15, et une barrette 16, convenablement profilée, qui vient serrer les anneaux 15 contre le siège 14a en un point de ceux-ci opposé à leurs fentes, lesquelles sont alignées pour pouvoir recevoir simultanément le couteau 17 du dispositif 11. On aperçoit en 18 un goujon fileté solidaire de l'embase 14 et qui traverse la barrette 16, son extrémité dépassante portant un écrou de serrage 19. Le goujon 18 passe entre les deux jeux d'anneaux 15, lesquels peuvent être entaillés latéralement à cet effet. La barrette 16 peut se terminer par des extrémités non profilées qui viennent se disposer de part et d'autre de l'embase.

Comme montré, les anneaux 15 de chaque jeu sont de diamètres notablement différents de telle sorte que dans la zone du couteau 17 opposée à la barrette 16 il existe entre eux des espaces notables.

Le dispositif de couteau 11 comprend lui aussi une embase 20 fixée au support isolant 12 et dont le couteau 17 est directement solidaire en étant fait d'une seule pièce avec elle.

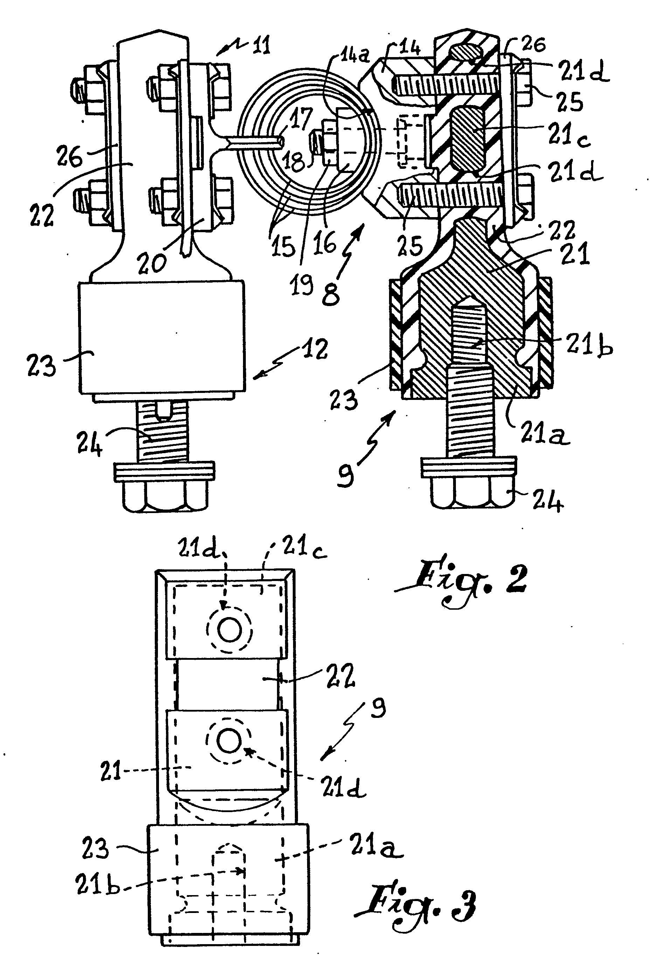

Comme sus-indiqué, les supports isolants 3, 9 et 12 sont identiques. On se bornera donc à écrire celui 9 afférent au dispositif de pince 8. Ce support comprend une armature métallique 21 (fig. 2 et 3), un recouvrement isolant 22 injecté autour de celle-ci et un manchon protecteur 23. L'armature 21 comporte à son tour une partie de base 21a, de forme cylindrique, percée d'un alésage axial borgne 21b convenablement fileté pour recevoir une vis de fixation 24 ; cette partie de base 21a se prolonge par une partie plate 21c percée de deux larges trous successifs 21d. Le recouvrement 22, fait d'une matière thermo-durcissable chargée de fibres de verre, pénètre dans les trous 21c, mais sa partie correspondante est elle-même percée co-axialement à ces trous pour recevoir des vis 25 qui viennent se visser dans l'embase 14, leurs têtes portant contre une contre-plaque de serrage 26. Quant au manchon 23 il est fait en une matière incombustible à très faible coefficient de frottement et résistant bien à la chaleur, telle que celle connue sous le nom de Téflon. Il est monté sur la partie du recouvrement 22 qui entoure la partie de base cylindrique 21a de l'armature 21.

On comprend que dans chaque jeu d'anneaux 15, chacun de ceux-ci agit individuellement pour s'adapter sur le couteau 17 et le serrer élastiquement. L'ensemble de ces anneaux peut donc tolérer des défauts notables concernant la position et l'orientation des couteaux.

Par ailleurs de tels anneaux sont de fabrication très simple et, du fait qu'ils agissent indépendamment les uns des autres il n'est nul besoin de rectifier leurs faces de contact après montage. Le nombre des jeux d'anneaux 15 peut varier en fonction des intensités à transmettre, ce qui permet de réduire au minimum celui de types de ces jeux pour correspondre aux puissances des moteurs. L'identité des supports isolants 3, 9 et 12 facilite la fabrication et réduit le prix de revient. On notera que dans ces supports la matière plastique est uniquement soumise à des efforts de compression qu'elle peut supporter de façon parfaite. Le manchon 23 joue ailleurs le rôle de protecteur à l'encontre des dépôts de poussières conductrices susceptibles de provoquer des amorçages tout en garantissant que même s'il apparaît un arc local fugitif, celui-ci ne créera pas une zone superficielle charbonneuse susceptible de faciliter des fuites de courant et des amorçages ultérieurs.

Il doit d'ailleurs être entendu que la description qui précède n'a été donnée qu'à titre d'exemple. Bien que les supports isolants décrits soient particulièrement adaptés, on pourrait éventuellement en utiliser d'autres. Il serait possible d'autre part d'interposer des cales entre les divers anneaux 15 dans leur partie serrée entre la barrette 16 et le siège 14a dans la mesure où cela ne rapprocherait pas indûment les parties fendues de ces anneaux. Le nombre des anneaux dans chaque jeu peut être quelconque.

## Revendications

1. Ensemble de porte-balais pour moteurs électriques, et notamment pour moteurs de traction, du genre dans lequel les porte-balais (1) sont portés par une couronne (2) co-axiale au collecteur (5) et susceptible de tourner autour de celui-ci, des moyens étant prévus pour permettre de la bloquer à la position désirée, tandis que l'amenée de courant est assurée par des dispositifs de pince (8) et des dispositifs de couteaux (17) fixés respectivement à ladite couronne et à la carcasse, ou inversement, caractérisé en ce que le dispositif de pince (8) comprend au moins un jeu d'anneaux fendus (15) disposés les uns dans les autres de façon telle que leurs fentes soient alignées pour recevoir le couteau (17) correspondant, ces anneaux étant fixés à une embase appropriée (14) en un point de leur périphérie opposée à leur fente et étant de diamètres suffisamment différents pour que dans la zone où ils coopèrent avec le couteau ils soient séparés les uns des autres par des espaces notables en pouvant ainsi fonctionner indépendamment les uns des autres.

2. Ensemble suivant la revendication 1, caractérisé en ce que les anneaux (15) des divers jeux de chaque dispositif de pince (8) sont serrés dans une dépression profilée (14a) de l'embase (14).

3. Ensemble suivant la revendication 2, caractérisé en ce que le serrage des anneaux (15) contre la dépression (14a) de l'embase (14) est assuré par une barrette (16) convenablement profilée et traversée par un goujon de serrage (18).

4. Ensemble suivant l'une quelconque des revendications qui précèdent, caractérisé en ce que chaque dispositif de pince (8) est porté par un support (9) comprenant une armature métallique (21) à revêtement isolant (22), laquelle comporte une partie plate (21c) percée de trous (21d) dans laquelle la matière de recouvrement pénètre, en y comportant elle-même un trou de moindre diamètre propre au passage de vis (25) ou équivalents permettant de relier l'embase (14) du dispositif de pince (8) à une contre-plaquette de serrage (26).

5. Ensemble suivant la revendication 4, caractérisé en ce que l'armature métallique (21) comprend encore une partie cylindrique (21a) à face d'extrémité non recouverte propre à assurer la fixation du support, cette partie cylindrique étant également entourée par le revêtement isolant (22) sur lequel est ici disposé un manchon (23) fait en une matière incombustible à très faible coefficient de frottement.

6. Ensemble suivant l'une quelconque des revendications qui précèdent, caractérisé en ce que les supports isolants (3, 12) des porte-balais (1) et des dispositifs de couteau (11) sont identiques à ceux (9) des dispositifs de pince.

## Claims

1. A set of brush-holders for an electric motor, and in particular for haulage motors, of the type in which the brush-holders (1) are carried by a crown (2) coaxial with a collector (5) and capable of turning around the latter, means being provided to allow it to be locked in the desired position, whilst the supply of current is ensured by clamp devices (8) and cutter devices (17) fixed respectively to the said crown and to a carcass, or vice versa, characterized in that the clamp device (8) comprises at least one set of split rings (15) arranged one inside the other such that their slits are aligned to receive the corresponding cutter (17), these rings being fixed to a suitable base (14) at a point on their periphery opposite their slit and being of sufficiently different diameters such that in the zone in which they cooperate with the cutter they are separated from each other by appreciable spaces, thus being able to operate independently of each other.

2. A set as claimed in Claim 1, characterised in that the rings (15) of the various sets of each clamp device (8) are tightly packed into a profiled depression (14a) in the base (14).

3. A set as claimed in Claim 2, characterised in that the packing of the rings (15) against the depression (14a) of the base (14) is ensured by a small bar (16) which is suitably profiled and traversed by a tightening pin (18).

4. A set as claimed in any one of the preceding claims, characterised in that each clamp device (8) is carried by a support (9) comprising a metallic armature (21) with an insulating coating (22), which armature has a flat part (21c) perforated with holes (21d) in which the covering material penetrates, itself having a hole of lesser diameter suitable for screws (25) or suchlike to be passed through it, so as to allow the base (14) of the clamp device (8) to be joined to a counter packing plate (26).

5. A set as claimed in Claim 4, characterised in that the metallic armature (21) further comprises a cylindrical part (21a) with a non-covered end face suitable to ensure the attachment of the support, this cylindrical part being likewise surrounded by the insulating coating (22) on which a sleeve (23) is arranged made from an incombustible material with a very low coefficient of friction.

6. A set as claimed in any one of the preceding Claims, characterised in that the insulating supports (3, 12) of the brush-holders (1) and of the cutter devices (11) are identical to those (9) of the clamp devices.

## Ansprüche

1. Bürstenhaltersatz für Elektromotoren und insbesondere für Fahrmotoren, der Gattung, bei der die Bürstenhalter (1) in einem zum Kollektor (5) koaxialen Ring (2) getragen werden und zum Drehem um den Kollektor vorgesehen sind, wobei Mittel vorgesehen sind, den Ring in der gewünschten Position zu blockieren, während die Stromzufuhr über Klemmenvorrichtungen (8) und Messervorrichtungen (17) sichergestellt ist, die jeweils an besagtem Ring und am Gehäuse oder umgekehrt befestigt sind, dadurch gekennzeichnet, dass die Klemmenvorrichtung (8) mindestens einen Satz Schlitzringe (15) aufweist, die derart angeordnet sind, dass ihre Schlitze zum Aufnehmen des entsprechenden Messers (17) ausgerichtet sind, wobei diese Ringe auf einem geeigneten Unterteil (14) an einem ihrem Schlitz entgegengesetzten Punkt ihrer Peripherie befestigt sind und wobei sie einen genügend unterschiedlichen Durchmesser aufweisen, damit sie voneinander im Bereich, wo sie mit dem Messer im Eingriff sind, durch angemessenen Raum getrennt sind, wodurch sie unabhängig voneinander wirken können.

2. Bürstenhaltersatz nach Anspruch 1, dadurch gekennzeichnet, dass die Ringe (15) der verschiedenen Sätze jeder Klemmenvorrichtung (8) in einer profilierten Senkung (14a) des Unterteils (14) gesichert sind.

3. Bürstenhaltersatz nach Anspruch 2, dadurch gekennzeichnet, dass die Sicherung der Ringe (15) in der Senkung (14a) des Unterteils (14) durch eine geeignet profilierte und mit einem Spannstift (18) versehene Lasche (16) bewirkt wird.

4. Bürstenhaltersatz nach einem der vorangehenden Ansprüche, dadurch gekennzeichnet, dass jede Klemmenvorrichtung (8) von einem Träger (9) getragen wird, der eine metallische Armatur (21) mit isolierender Ummantelung (22) enthält, wobei die Armatur einen flachen, von Löchern (21d) durchbohrten Teil umfasst, in den das Überzugsmaterial hineinragt, wobei er selbst ein Loch mit kleinerem Durchmesser aufweist, das für den Durchgang von Schrauben (25) oder äquivalenter Bauteile geeignet ist, wodurch das Unterteil (14) der Klemmenvorrichtung (8) mit einer Befestigungsgegenplatte (26) verbunden werden kann.

5. Bürstenhaltersatz nach Anspruch 4, dadurch gekennzeichnet, dass die metallische Armatur (21) noch einen zylindrischen Teil (21a) an der nicht mit einem Überzug versehenen Seite aufweist, der zur Sicherstellung der Befestigung des Trägers geeignet ist, wobei dieser zylindrische Teil gleichermassen von der isolierenden Ummantelung (22) umgeben ist, auf der eine Buchse (23) aus nichtbrennbarem Material mit sehr kleinem Reibungskoeffizienten angebracht ist.

6. Bürstenhaltersatz nach einem der vorangehenden Ansprüche, dadurch gekennzeichnet, dass die isolierenden Träger (3, 12) der Bürstenhalter (1) und der Messervorrichtungen (11) mit denen der Klemmenvorrichtung (9) identisch sind.

*Fig. 1*

*Fig. 2*

*Fig. 3*